# EUROPEAN PATENT APPLICATION

(11) **EP 3 584 503 A1**
(43) Date of publication of application: **25.12.2019**
(21) Application number: 17896737.8
(22) Date of filing: 19.05.2017
(51) Int. Cl.: F24D 1/00

(54) **SUBATMOSPHERIC HEATING SYSTEM**

(30) Priority: 14.02.2017 KZ 20170121
(71) Applicant: Khan, Viktor Konstantinovich, Taraz 080000 (KZ); Van, Igor Wu-Yunovich, Moscow 119285 (RU); Khan, Lyubov Viktorovna, Taraz 080000 (KZ); Khan, Anton Viktorovich, Taraz 080020 (KZ)
(72) Inventor: Khan, Viktor Konstantinovich, Taraz 080000 (KZ); Van, Igor Wu-Yunovich, Moscow 119285 (RU); Khan, Lyubov Viktorovna, Taraz 080000 (KZ); Khan, Anton Viktorovich, Taraz 080020 (KZ)
(74) Representative: Chimini, Francesco
(86) International application number: PCT/KZ2017/000013
(87) International publication number: WO 2018/151585

(57) **Abstract**

A subatmospheric heating system refers to the field of heat power, namely energy-saving technologies and is designed for autonomous heating of residential, public, industrial buildings and greenhouses, livestock farms, etc.

For highly efficient transfer of heat flow from the heat energy source, a vacuum-steam method of heat transfer is used in an environment with adjustable depth of dilution with separate condensate return and vacuuming devices, with the possibility of mounting the heat point in either the basement, floor and roof variants. The reliability of the system is ensured by its safe and uninterrupted operation, and in the case of an unsatisfactory level of airtightness of the system (to eliminate leakages).

The energy efficiency of a subatmospheric heating system is achieved by a high rate of heat transfer and a minimum consumption of electricity by periodically operating pumps, while the efficiency of the system is 88% with energy savings of up to 40%.

## Description

The invention relates to the field of heat power engineering, namely to energy-saving technologies.

A subatmospheric heating system with parallel devices for condensate return and vacuum regulation in the system is designed to transfer heat flow from the heat source to consumers and serves for autonomous heat supply of residential, public and industrial buildings, greenhouses, livestock farms, etc.

A vacuum-steam method based on the work on a closed evaporation-condensation cycle with a high rate of molar heat transfer by steam is used for high-efficiency heat flow transfer.

Vacuum-steam method of heat transfer is carried out by a system that includes: a steam boiler equipped with an unit of automatic control and blocking of energy supply, devices for visual control of the water level in the boiler and steam pressure, as well as safety valves that ensure the safety of boiler operation. Here are also horizontally located, the upper distribution steam pipe and condensate pipe with a condensate pump from the condensate collection tank to the boiler, vertical steam distribution lines for supplying steam to the pipe connection layout of heating devices, a vacuum water ring pump to create a vacuum and ensure quality control of the coolant temperature by changing the vacuum depth in the system by automatically controlling the operation of the pump. High efficiency of this system is by minimum energy consumption during the transmission of the heat flow from the heat source to the consumers, the Central qualitative and quantitative controls of the steam flow provided by the unit of automatic control and blocking of energy carrier flow, a device for controlling the depth of initial dilution ensured.

The system has a high coefficient of heat transfer with efficiency of 88% and significant energy savings of up to 40%. The energy efficiency of the system is also ensured by the fact that the operating modes of the condensate pump in the steam boiler and the vacuum water ring pump are periodic.

A vacuum steam system is known, which includes: a boiler with a steam collector, heating devices connected by means of cranes with a steam pipe, a condensate trap with a condensate pipe and a device for creating a vacuum (RF Patent No. 2195608, F24D 1/00 of 27.12.2002). This system is characterized by high metal quantity per unit and a high probability of loss of airtightness. The system does not provide for the regulation of energy consumption and explosion safety of the boiler.

A vacuum steam heating unit is known (the original source is a publication posted on the Internet, website: ngpedia.ru/id427980p1.html "Vacuum steam system. Great encyclopedia of oil and gas"). Unit includes: steam boiler, distribution line, risers for steam supply, heating devices, risers for condensate removal, filter, vacuum pump, air separator. The disadvantage of this system is consistently connected through an air separator with a steam boiler constantly working vacuum pump which consumes a significant amount of electricity. High probability of cavitation due to the fact that the pump in this system pumps in addition to air, steam and hot condensate, the air-purge drum in the moment of removal of air in the atmosphere does not effectively return the condensate to a steam boiler when there are excessive pressure and at an absolute pressure in the boiler, less than atmospheric, there is a high probability of outdoor air absorption into the boiler. The explosion safety system of the boiler is not provided.

The closest analogue is the well-known vacuum steam system (original source P. N. Kamenev, A. N. Skanavi, V. N. Bogoslovsky "Heating and ventilation, part 1" Moscow, Stroyizdat, 1975), in the scheme of the device which includes: steam boiler, pipe steam condensate piping with heating devices, steam traps, condensate tank, device regulating the parameters of the system, water ring pump for creating vacuum and condensate pumping. The disadvantages of this system - high probability of loss of airtightness through the sealing device liquid ring vacuum pump, and the impossibility of regulating pressure-controlled diaphragm at different values of the vacuum because when using this controller the enabling and disabling of the pump will only be possible for one particular value of a specified dilution, a different vacuum reading will require readjustment of the regulator. When the vacuum water ring pump is switched off for an indefinite time, the condensate supply to the boiler will stop, because the pump is connected to the boiler consecutively. The pump must be running, constantly consuming a significant amount of electricity. Restriction on the device location of the heat point with a steam boiler only in the basement due to the restriction of the return of condensate to the boiler at the back pressure of the steam head in the vacuum pump discharge line.

The object of the invention is to create a heating system with an efficient use of energy (natural gas, electricity, etc.), minimum electricity consumption by a vacuum water ring pump and a condensate pump, the use of inexpensive materials, reliable and safe operation, creating conditions for convenient installation, ensuring ease of maintenance and operation and the possibility of locating the steam boiler, either in the basement, floor and roof variants.

The technical result is achieved by the fact that the heat flow is transferred by a vacuum-steam method based on the superconductivity of thermal energy with a high coefficient of heat flow transfer from the heat source to consumers through a closed circulation system of pipelines (steam and condensate pipelines). The use of vacuum-steam method of heat transfer allows to reduce energy consumption by reducing costs for the transfer of thermal energy to the heating system of the premises. To ensure the transportation of the heat carrier (vacuumed steam) low-cost materials (pipes, mild steel, metal-plastic tube, conventional fittings, valves and steam fittings, etc.) are applicable. All this is due to the introduction into the system of a periodically operating vacuum water ring pump with an automatic vacuum depth control system using an electric contact pressure gauge (PGS), depending on the state of the system and the specified vacuum parameters, which removes the dissolved air in the intermediate coolant (water, antifreeze) with a coolant temperature not exceeding 96°C. Implementation of the automatic control unit (EA) of energy carrier supply, combined with the executing mechanism (HM) in the burner device of the steam boiler, allows to make the Central quantitative control of the heat carrier (steam) consumption, and the system of blocking of energy carrier supply and filling of the boiler with the strictly dosed quantity of the intermediate heat carrier provides explosion safety of the boiler. A small amount of intermediate coolant filling also reduces energy costs for rapid heating of the intermediate coolant - water in the boiler, which leads to significant savings in water resources.

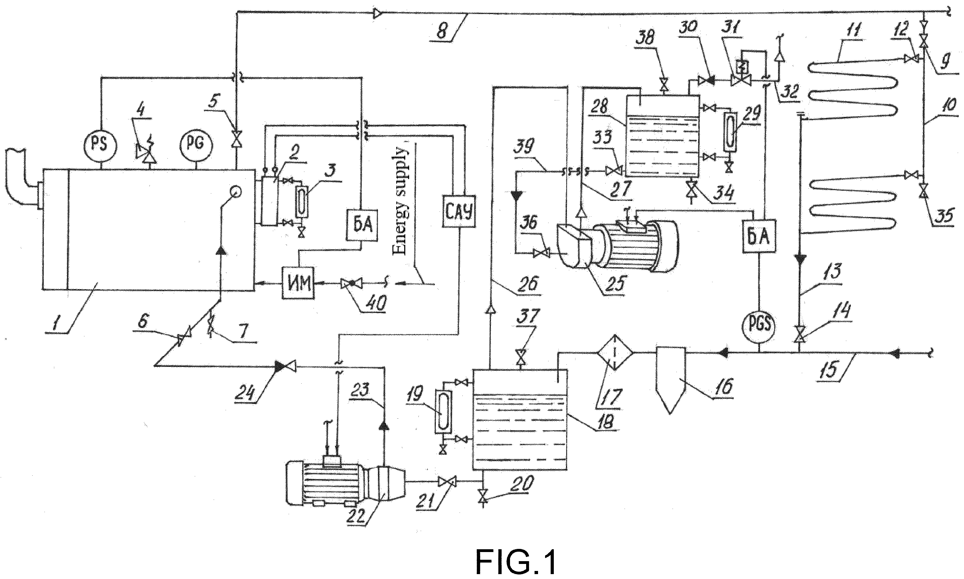

Fig. 1 shows a diagram of a subatmospheric heating system with parallel devices for condensate return to the boiler and vacuum system.

A subatmospheric heating system consists (see Fig. 1) of: steam production units, condensate return devices to the boiler, vacuum devices and quality control of the steam temperature by the depth of the vacuum and the heating system of the premises.

Steam production unit includes: steam boiler 1, equipped with a water column 2 with conductometric sensors of the upper and lower level of the intermediate coolant in the boiler, a water indicator 3, a safety valve 4, a steam supply valve to the heating system of premises 5, a valve 6, a valve for filling the steam boiler with an intermediate coolant (softened water, ethylene glycol - antifreeze) 7, a plug valve 40; automatic control and blocking system of energy supply, comprising: a pressure switch (PS) automation unit ( 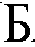 A) to control the operation of the Executive mechanism of the executing machine ( 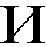 M); a means for visual inspection of pressure - rarefaction (PG), level switch (CAY).

The condensate return device to the boiler includes: condensate collection tank 18, equipped with a water indicator 19 and an air removal valve when filling the tank with an intermediate coolant 37, a valve for pre-filling the tank with an intermediate coolant 20, a water supply valve to the condensate pump 21, a centrifugal type condensate pump 22 with an ejector device, a pressure pipeline 23 and a return valve 24.

The device for vacuuming and quality control of the steam temperature includes: vacuum water ring pump (WRP) 25, 36 valve for supplying water to the WRP for the formation of a water ring, a pipeline for removing air from the system 26 through a condensate tank, a pipeline for removing air 27 into the air separator, a pipeline for removing air 32 from the air separator, a pipeline for supplying water to the WRP 39; the air-purge drum, which includes the tank of the air-purge drum 28, a valve 33 for supplying water in WRP, the valve 34 for pre-filling the air-purge drum with water, water indicator 29, the valve 38 for venting the tank of air-purge drum when filling with water, return valve 30, solenoid valve 31 in the position of "normally closed" and the pipeline of removal of air in the atmosphere 32, the automation unit (EA) managing operation of WRP, depending on the set parameters of the desired dilution.

The premises heating system includes: distribution steam pipe 8, the valves of vacuumed steam supply 9, the vertical raising steam pipes 10, a valve 35 for emptying vertical steam distribution pipeline (if necessary), the valves of adjusting the steam flow 12 to the heaters 11 (registers, radiators, etc.), vertical condensate lines 13, cut-off valves 14, a Central condensate line 15 and installed dirty tank 16, grid filter 17 and electric-contact pressure gauge (PGS) to control the vacuum in the system and transmit signals to the control unit WRP.

It should be particularly noted that in order to achieve a satisfactory level of airtightness of the entire system, after installation, a mandatory test of each device for leakage of 99% of air + 1% helium by the injection pressure of 0.6 MPa should be carried out. Monitoring of leakages is to be done by a helium leakage detector.

A subatmospheric heating system works the following way: valves 6, 7, 20, 34, 35, 36 and plug valve 40 to set in the "Closed" position, valves 5, 9, 12, 14, 21, 33, 37 and 38 to set in the "Open" position.

Attach to the valve 7 a flexible pipe of the calibrated capacity (in Fig. 1 conditionally not shown) with an intermediate coolant (softened water or antifreeze), set the valve in the "Open" position, fill the steam boiler with water to the upper level of the water space of the boiler by the water indicator 3, then set the valve in the "Closed" position, disconnect the pipe, and set the valve 6 in the "Open" position.

Attach the flexible pipe of the calibrated container with an intermediate coolant to the valve 20 of the condensate collection tank 18, set the valve in the "Open" position, refuel with water to the nominal operating level by the water indicator 19, set the position of the valves 20, 37 in the "Closed" position, after refueling, disconnect the flexible pipe.

Attach the flexible pipe of the calibrated container with the intermediate coolant to the valve 34, fill the tank of the air separator 28 with water to the nominal working level on the water indicator 29, after filling, set the valves 34, 38 to the "Closed" position and disconnect the pipe, and set the valve 36 to the "Open" position to fill WRP with water.

Set on the electric-contact pressure gauge (PGS) the range of the required vacuum level, with a decrease in the vacuum (in the case of leakages), the WRP is turned on to restore the specified range, while the solenoid valve 31 is set to the "Open" position and the pumped air through the pipelines 26, 27 and 32 is removed to the atmosphere, and when the required level of vacuum is reached, the WRP is turned off. The system is initially vacuumed to an absolute pressure of 0.03 MPa with a vacuum depth of 0.07 MPa when this vacuum is reached, the WRP is disengaged, and the solenoid valve is set to the "Closed" position, with a decrease in the vacuum to 0.01 MPa, the vacuum water ring pump is automatically activated (with satisfactory airtightness) the pump on - off period is 80÷100 min. Setting different in depth ranges of vacuum on an electric-contact pressure gauge (PGS) makes quality control of the steam temperature possible.

Simultaneously with starting the vacuum system, set the plug valve 40 to the "Open" position for supplying energy, start the burner device of the steam boiler with an automatic control and block unit of energy supply, which reacts to signals from the pressure switch (PS) - when the absolute pressure inside the steam space of the boiler reaches 0.1 MPa, the automation unit reduces the energy supply to achieve the steam pressure to the working, nominal absolute pressure of 0.08 MPa at which the steam temperature is 93°C, thereby producing a Central quantitative regulation of the steam temperature. At the termination, for any reasons of the energy carrier supply the automatic equipment of the boiler blocks sudden repeated supply of the energy carrier, thereby providing explosion safety and reliability of operation of the steam boiler.

When the lower or upper operating levels of the intermediate coolant in the boiler are reached, the conductometric sensors of the level transmitter column 2 give electrical signals to the level switch (CAY), which in turn controls the operation of the pumping condensate pump 22 (on or off), in this case the pump operation mode is periodic.

Thus, the periodic operation of both the WRP and the pumping condensate pump leads to significant savings in electrical energy.

The speed of molar heat transfer by vacuum steam reaches 80 m/s and more, as well as an absolute pressure not exceeding 0.09 MPa, which ensures high efficiency of heat energy transfer from the boiler to heating devices with low metal quantity per unit and increased heat transfer coefficients in heated rooms.

A feature of this heating system is that it is divided into independently operating from each other device of the condensate return and vacuum device with automatic control to create different values of rarefaction, which allows to produce quality regulation of temperature in the system with a broad range of depth of vacuum of 0.01 MPa to 0.07 MPa, a temperature difference of the coolant in this case is from 96°C to 68°C, which corresponds to the sanitary norms - hygienic requirements, as well as this temperature difference allows the use of plastic and polyethylene pipes, pipe fittings made of plastic materials subject to the least degree of corrosion.

Application in the heating system of the premises of the scheme with the upper distribution of steam, with the passing movement of steam and condensate, provides silent passage of steam at high speed, there is no need for the use of steam traps, while the heat transfer coefficient is much higher compared to traditional systems of water and atmospheric steam heating.

Thermal analysis of the industrial prototype showed that the efficiency of this subatmospheric heating system reaches 88%, with energy savings ranging from 38% to 40%.

The heating system is easy to maintain, safe to operate and provides reliable, uninterrupted operation of heat supply.

## Claims

1. A subatmospheric heating system with the transfer of heat flow by vacuum-steam method, a system comprising: a steam production unit, a heating system, a condensate return device, a device for vacuuming and qualitative regulation of the steam temperature by the depth of vacuum, **which differs in that** the condensate return device and the vacuuming device operate independently and in a periodic mode.

2. The system according to claim 1 **differs in that** the steam production unit is equipped with an automatic control blocking unit of energy supply, a level transmitter column with conductometric sensors for monitoring the level of the intermediate coolant, an indicator of the control level of the pumping condensate pump, an automatic control system for the operation of the vacuum water ring pump.
